**Europäisches Patentamt**

**European Patent Office**

**Office européen des brevets**

(19)

(11) Veröffentlichungsnummer: **0 339 248 B1**

(12) # EUROPÄISCHE PATENTSCHRIFT

(45) Veröffentlichungstag der Patentschrift:
**27.11.91 Patentblatt 91/48**

(51) Int. Cl.$^5$: **F16L 33/22, F16L 37/12**

(21) Anmeldenummer: **89104919.9**

(22) Anmeldetag: **18.03.89**

(54) **Zweiteiliger metallischer Klemmverbinder.**

(30) Priorität: **23.04.88 DE 3813815**

(43) Veröffentlichungstag der Anmeldung:
**02.11.89 Patentblatt 89/44**

(45) Bekanntmachung des Hinweises auf die
Patenterteilung:
**27.11.91 Patentblatt 91/48**

(84) Benannte Vertragsstaaten:
**AT BE CH ES FR GB GR IT LI LU NL SE**

(56) Entgegenhaltungen:
**EP-A- 0 245 599**
**CH-A- 352 206**
**GB-A- 1 185 220**

(73) Patentinhaber: **REHAU AG + Co**
**Rheniumhaus**
**W-8673 Rehau (DE)**

(72) Erfinder: **Der Erfinder hat auf seine Nennung
verzichtet**

EP 0 339 248 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft einen zweiteiligen metallischen Klemmverbinder für Rohre und Schläuche aus polymerem Werkstoff mit einem als Rohrhülse ausgebildeten Verbindungsstück, das einen in das Rohrende einzusetzenden Steckbereich aufweist, und einer axial zur Rohrachse bewegbaren Schiebehülse, die unter Herstellung der Klemmverbindung über das Rohrende mit dem eingesetzten Steckbereich überschiebbar ist.

Aus der DE-A-2149136 ist ein Schlauchverbinder mit einer rohrförmigen Einstecktülle und einem der Einstecktülle überlagerten Spannring bekannt geworden, wobei dieser Spannring axial gegenüber der Einstecktülle verstellbar ist. Die Einstecktülle weist dabei einen gegen ihr freies Ende zunehmenden Durchmesser und der Spannring eine konische Innenbohrung auf, welche gegen das freie Ende der Einstecktülle erweitert ist. Bei dem Schlauchverbinder des Standes der Technik ist der Unterschied zwischen dem kleinsten Radius der konischen Innenbohrung des Spannringes und dem größten Radius der Einstecktülle kleiner als die Wanddicke des Schlauches ausgeführt. Dieser Schlauch wird auf die Einstecktülle aufgeschoben und daraufhin durch axiales Verschieben des Spannringes auf der Einstecktülle festgespannt.

Der bekannte Klemmverbinder hat den Nachteil, daß sich beim Betrieb die konische Klemmhülse vom Rohr lösen kann, wodurch die Klemmverbindung undicht wird. Bei einem Rohr aus vernetztem Polyethylen erklärt sich dieser Vorgang so, daß das im Bereich der Klemmverbindung eingespannte vernetzte Polyethylen das Bestreben hat, sich zu dehnen. Daran wird das Rohr durch die aufgespannte konische Klemmhülse gehindert.

Bei Wechseltemperaturbeanspruchungen, z.B. bei der Abkühlung nach der Durchleitung von warmen Fluiden, schrumpft der Bereich des eingeklemmten Polyethylen-Rohres entsprechend der Temperaturdifferenz zurück. Dadurch kann es zu einer Spaltbildung zwischen der Klemmhülse und dem Rohr aus vernetztem Polyethylen kommen. Bei der nächsten Druckbeaufschlagung kann es dann zum Herausschieben des vernetzten Polyethylen-Rohres aus dem Klemmverbinder kommen.

Es sind weitere Klemmverbinder bekannt, die auf der Basis einer Schraubverbindung beruhen. Hierbei wird mit einem geschlitzten Klemmring gearbeitet, welcher über eine Überwurfmutter mit dem Gewindeteil der Stützhülse zusammenwirkend bei der Herstellung der Schraubverbindung die Klemmwirkung herbeiführt. Die Rohrwandung wird dabei zwischen dem äußeren Umfang der Stützhülse und der Innenwandung der zweigeteilten Klemmhülse verspannt.

Der Nachteil dieser bekannten Art von Klemmverbindern ist darin zu sehen, daß bei herstellungsbedingter Exzentrität der Kunststoffrohre der Klemmring beim Anziehen mittels der Überwurfmutter verkanten kann. Auf diese Weise läßt sich demnach keine auf Dauer dichte Klemmverbindung erzeugen. Ein weiterer Nachteil ist darin zu sehen, daß durch die Verwendung der Schraubverbindung das Erfordernis einer unlösbaren Verbindung mit diesem Klemmverbinder des Standes der Technik nicht erfüllbar ist.

Durch die DE-C-3608843 (& EP-A-245599) ist ein Verfahren zur Herstellung einer Klemmverbindung für Rohre und Schläuche aus polymeren Werkstoffen bekannt geworden, wobei ein als zylindrische Rohrhülse ausgebildetes Verbindungsstück mit seinem am Außenumfang gerippten Steckbereich in das Rohr- bzw. Schlauchende eingesetzt und danach eine axial zur Rohrachse bewegliche zylindrische Schiebehülse unter Herstellung der Klemmverbindung über das Rohr- bzw. Schlauchende mit dem eingesetzten Steckbereich aufgepresst wird. Wesentliches Merkmal dieser bekannten Klemmverbindung ist, daß das Rohr- bzw. Schlauchende vor dem Einsetzen des Steckbereiches auf dessen äußeren Umfang aufgeweitet wird. Beim Aufpressen der Schiebehülse wird das Material des Rohr- bzw. Schlauchendes partiell in die Nuten des gerippten Steckbereichs des Verbindungsstückes eingepresst, wodurch die unlösbare feste Verbindung geschaffen wird.

Eine ähnliche Klemmverbindung ist aus der CH-A-352206 bekannt geworden. Die dort beschriebene Verbinderkombination zwischen einem mit Außenrippen versehenen Verbindungsstück und der Schiebehülse verzichtet auf das Aufweiten des Schlauches beim Einsetzen des Verbindungsstückes. Dieses wird in das Schlauchlumen eingedrückt und die Schiebehülse wird anschließend am äußeren Umfang des Schlauches über das eingedrückte Verbindungsstück gepresst. Die Schiebehülse selbst besitzt bei längsverlaufend glattem Innenumfang in Pressrichtung eine konische Eindrehung, die das Aufpressen erleichtert.

Hier setzt die Erfindung ein, die es sich zur Aufgabe gestellt hat, eine Verbesserung dieser Schiebehülse durchzuführen, mit der neben der Erleichterung beim Aufpressen gleichzeitig eine Verschiebesicherung erzielbar ist. Erfindungsgemäß wird dazu vorgeschlagen, daß nach einem am Ende der konischen Eindrehung folgenden kurzen, zylindrischen Abschnitt in die innere Umfangswand der Schiebehülse eine Hohlkehle umlaufend eingebracht ist.

Zur Herstellung der Klemmverbindung wird das Rohr- bzw. Schlauchende zunächst so weit aufgeweitet, daß der Steckbereich des Verbindungsstükkes in das aufgeweitete Schlauchende eingeschoben werden kann. Die zylindrische Schiebehülse ist vorher auf den äußeren Umfang des Rohres bzw. Schlauches aufgeschoben worden. Nach dem Einbringen des Steckbereiches wird die Schiebehülse mit einem einfachen Werkzeug bis zum Anschlag an den Flanschansatz geschoben.

Da die lichte Weite der Schiebehülse kleiner ist als der Außenumfang des aufgeweiteten Rohr- bzw. Schlauchendes, erfolgt dabei die Verpressung des Wandmaterials bis zum unlösbaren Endsitz der Schiebehülse. Der Beginn der Verpressung erfolgt mit dem Ansetzen der konischen Eindrehung am Ende der Aufweitung und setzt sich über die Aufweitung fort bis zum Anschlag des freien Endes der Schiebehülse am Flanschansatz des eingesetzten Steckbereichs.

Während des Aufpressens der Schiebehülse wird aufgrund der einsetzenden und fortlaufenden Verpressung Wandmaterial des Rohres bzw. Schlauches in den Freiraum unter der konischen Eindrehung gepresst und wandert während der Verpressung in diesem Raum fortlaufend mit. Beim Anschlag des freien Endes der Schiebehülse am Flanschansatz verfüllt dieses verpresste Rohrwandmaterial den Freiraum unter der konischen Eindrehung. Während des Auf- und Überpressens der Schiebehülse wird aber nicht nur der Freiraum unter der konischen Eindrehung, sondern auch die Hohlkehle in der inneren Umfangswand der Schiebehülse mit dem verpressten Rohr- bzw. Schlauchwandmaterial verfüllt. Im Endsitz der Schiebehülse ist der zylindrische Abschnitt zwischen der Hohlkehle und der konischen Eindrehung in das Wandmaterial des Rohres bzw. Schlauches eingebettet. Diese Einbettung und das in die Hohlkehle verpresste Wandmaterial des Rohres bzw. Schlauches ist eine Verschiebesicherung der Schiebehülse in ihrem Endsitz und gewährleistet eine unverrückbar dauernde Sitzverbindung der Schiebehülse auf dem verpressten Rohr- bzw. Schlauchende.

Zusätzlich zu dieser Verschiebesicherung erfolgt beim Aufpressen der Schiebehülse ein Einpressen des Rohr- bzw. Schlauchwandmaterials in die Umlaufnuten der gerippten Rohrhülse. Diese Nutenausfüllung dient der — an sich bekannten — Verschiebesicherung der Rohrhülse in ihrem Sitz im Rohr- bzw. Schlauchende.

Die erfindungsgemäße Hohlkehle am inneren Umfang der Schlauchhülse erweitert diese Verschiebesicherung auf die Schiebehülse und bewirkt somit auch in diesem Bereich einen dauernden Festsitz. Damit ist sowohl von innen als auch von außen eine verbleibend feste und dichte Verbindungsmöglichkeit gegeben.

Es hat sich als vorteilhaft erwiesen, daß der zum Inneren der Schiebehülse verlaufende Winkel der Hohlkehle spitzwinkelig ist. Dadurch wird bei der Aufpressung eine größere Kraft auf das Rohr- bzw. Schlauchwandmaterials erzielt. Diese Kraft bleibt nach Abschluß der Aufpressung erhalten und dient der Verschiebesicherung sowohl der Schiebehülse als auch der Rohrhülse.

Es kann ferner zweckmäßig sein, daß über die Länge der Schiebehülse mehrere hintereinander angeordnete Hohlkehlen am inneren Umfang eingebracht sind.

Die Schiebehülse kann geringfügig länger ausgebildet sein als der Steckbereich des Verbindungsstückes, wodurch der gesamte Bereich der Rohraufweitung abgedeckt wird. Das Verbindungsstück weist vorteilhaft im Anschluß an den Steckbereich einen umlaufenden Flanschansatz auf, welcher als Anschlag für das aufzuschiebende Rohrende und für die Schiebehülse dient. Im Anschluß an diesen Flanschansatz kann das Verbindungsstück dann einen Gewindeteil besitzen, über den eine Gewindeverbindung zu einer Rohrverlängerung, zu einem Formteil usw. herstellbar ist. Es können auch T-Stücke, Kupplungen usw. auf Basis des Verbindungsstückes gebildet werden.

Das in dieser Klemmverbindung verwendete Rohr bzw. der damit zu verbindende Schlauch kann aus thermoplastischem Kunststoff oder auch aus thermoplastisch, elastomerem Kunststoff wie vernetztem Polyethylen bestehen.

In der Zeichnung ist der bekannte und der erfindungsgemäße Klemmverbinder schematisch dargestellt ; es zeigt :

Fig. 1 eine Explosionsdarstellung der Einzelteile des Klemmverbinders nach dem Stand der Technik gemäß DE-C-3608843

Fig. 2 einen Querschnitt durch eine bei der erfindungsgemäßen Klemmverbindung benutzte Schiebehülse

Fig. 3 einen Teilschnitt durch die mit dieser Schiebehülse hergestellte erfindungsgemäße Klemmverbindung.

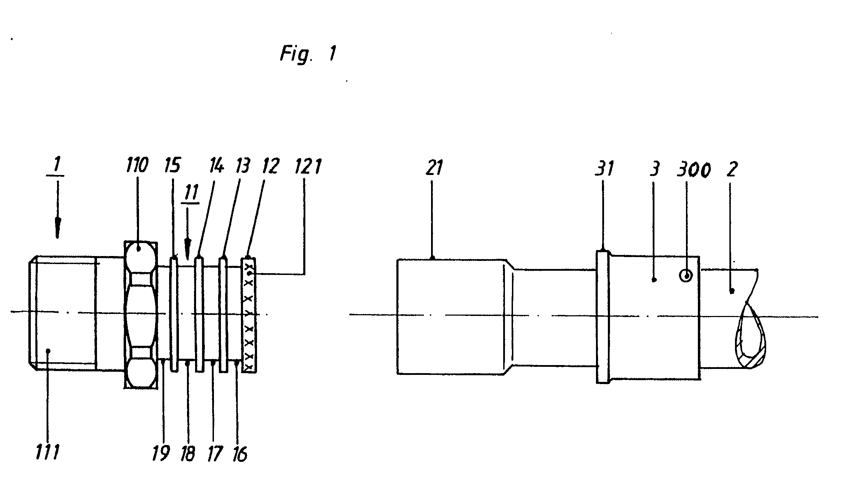

In Fig. 1 ist in linker Darstellung das Verbindungsstück 1 gezeigt. Dieses Verbindungsstück 1 besteht aus dem Gewindeteil 111, aus dem Flanschansatz 110 und aus dem Steckbereich 11.

Das Gewindeteil 111 kann ein Außen- oder Innengewinde aufweisen, je nachdem, wie die weiteren Verbindungsstücke gestaltet sind. Der Flanschansatz 110 kann ein rundumlaufender Ring mit glatter Oberfläche sein, es können am äußeren Umfang jedoch auch regelmäßige Flächen abgearbeitet sein, wodurch der Ansatz von Arbeitswerkzeugen, wie Maulschlüsseln, ermöglicht wird. Der Steckbereich 11 zeigt die am äußeren Umfang im Abstand voneinander angeordneten Rippen 12, 13, 14, 15, die zwischen sich die Nuten 16, 17, 18, 19 einschließen. Die Nut 19 ist dabei von der Rippe 15 einerseits und dem Flanschansatz 110 andererseits begrenzt. In der Darstellung weist die Rippe 12 an ihrem äußeren Umfang eine als Rändelung gezeichnete Profilierung 121 auf. Diese Rändelung dient der zusätzlichen Halterung.

In Achsrichtung schließt sich nach rechts der Kunststoffschlauch/das Kunststoffrohr 2 an, welches mit seinem aufgeweiteten Bereich 21 in unmittelbarer Nähe der Rippe 12 des Steckbereichs 11 dargestellt ist. Über den Kunststoffschlauch/das Kunststoffrohr 2 ist die Schiebehülse 3 geschoben, welche mit ihrer Aufkelchung 31 in der Nähe des Beginns der Aufweitung 21 auf der Oberfläche des Kunststoffschlauches/Kunststoffrohres 2 sitzt.

Die Schiebehülse 3 weist in der gezeigten Darstellung eine Eindrückung 300 auf, die sich nach innen zur Oberfläche des Kunststoffschlauches/Kunststoffrohres 2 als Profilierung auswirkt.

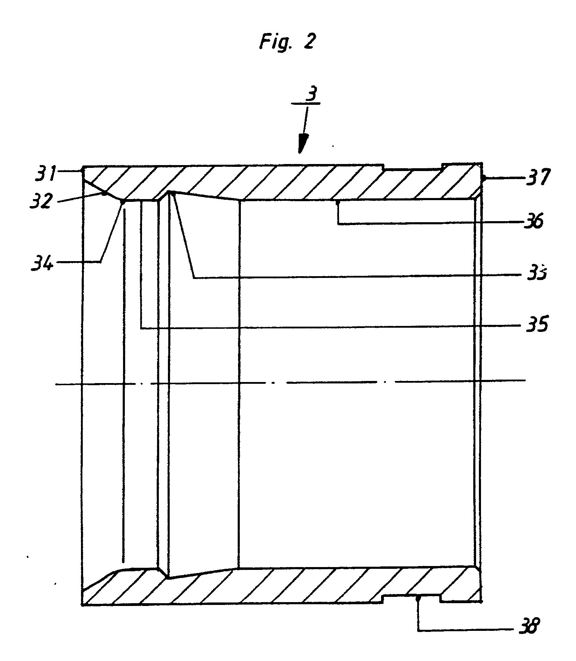

Fig. 2 zeigt einen Schnitt durch die Schiebehülse 3 mit ihrem freien Ende 31 und der vom freien Ende 31 von außen nach innen über den Wandquerschnitt verlaufenden konischen Eindrehung 32. Die konische Eindrehung 32 endet im Radius 34, der seinerzeits in einen zylindrischen Abschnitt 35 übergeht.

Der zylindrische Abschnitt 35 entspricht in der Darstellung der Ebene der Umfangswand 36 der Schiebehülse 3. Dem zylindrischen Abschnitt 3 nachgeschaltet, ist eine Hohlkehle 33, die derart in die Umfangswand 36 der Schiebehülse eingebracht ist, daß der zum Inneren der Schiebehülse 3 verlaufende Winkel der Hohlkehle 33 spitzwinkelig ist. Im Bereich des hinteren freien Endes 37 der Schiebehülse 3 ist in die Außenwand eine flache Umlaufnut 38 eingebracht, die beispielsweise der Kennzeichnung oder ähnlichen Datenträgern dienen kann.

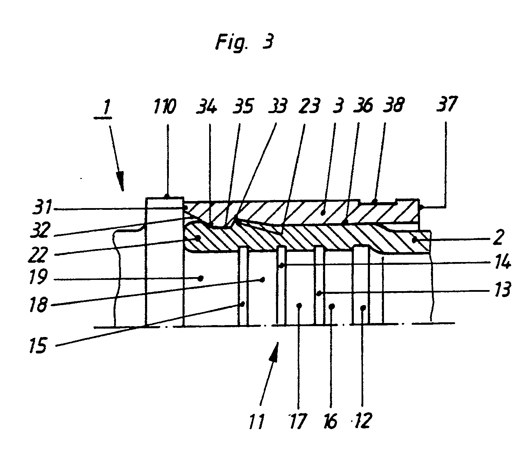

In Fig. 3 ist in einem Ausschnitt die Schiebehülse 3 in ihrem Endsitz auf dem Steckbereich 11 des Verbindungsstücks 1 dargestellt. Das freie Ende 31 der Schiebehülse 3 stößt dabei am Flanschansatz 110 des Verbindungsstückes 1 an. Es ist deutlich zu sehen, daß im Bereich des freien Endes 31 der Schiebehülse 3 das Wandmaterial des Rohres/Schlauches 2 in Form einer Aufwölbung in den Freiraum eingedrungen ist, der sich zwischen der konischen Eindrehung 32, der Oberfläche der Nut 19 und der Fläche des Flanschansatzes 110 gebildet hat. Gleichermaßen deutlich wird, daß die Hohlkehle 33 völlig von dem dort eingedrungenen Wandmaterial des Rohres/Schlauches ausgefüllt ist. Dieser Bereich hat die Bezugszahl 23 erhalten. Andere, bereits in der vorhergehenden Zeichenbeschreibung erläuterte Einzelheiten haben die gleichen Bezugszahlen wie dort erhalten.

## Patentansprüche

1. Zweiteiliger metallischer Klemmverbinder für Rohre und Schläuche aus polymerem Werkstoff, mit einem als Rohrhülse ausgebildeten Verbindungsstück, das einen in das Rohrende einzusetzenden Steckbereich aufweist, und einer axial zur Rohrachse bewegbaren Schiebehülse, die unter Herstellung der Klemmverbindung über das Rohrende mit dem eingesetzten Steckbereich überschiebbar ist, wobei die Schiebehülse an ihrem, dem Flanschansatz zugewandten freien Ende eine von außen nach innen über ihren Wandquerschnitt verlaufende konische Eindrehung aufweist, woran sich ein zylindrischer Bereich anschließt, dadurch gekennzeichnet, daß nach einem am Ende der konischen Eindrehung (32) mit einem Radiusübergang folgenden kurzen, zylindrischen Abschnitt (35) in die innere Umfangswand (36) der Schiebehülse (3) eine Hohlkehle (33) umlaufend eingebracht ist.

2. Klemmverbindung nach Anspruch 1, dadurch gekennzeichnet, daß der zum Inneren der Schiebehülse (3) verlaufende Winkel der Hohlkehle (33) spitzwinkelig ist.

3. Klemmverbinder nach Ansprüchen 1 und 2, dadurch gekennzeichnet, daß über die Länge der Schiebehülse (3) in die innere Umfangswand (36) mehrere hintereinander angeordnete Hohlkehlen (33) eingebracht sind.

## Claims

1. Two-part metal compression sleeve joint for pipes and tubes made of polymer material, with a sleeve-shaped connecting piece which exhibits a spigot for inserting into the pipe end, and a compression sleeve capable of being moved axially to the pipe axis and which can be pushed over the pipe end to form the compression sleeve joint whereby the free end of the compression sleeve wall facing the flange neck is conical in cross section and fits up against a cylindrical area, characterised by the fact that after a short cylindrical section (35) following the end of the conical wall section (32) a channel (33) is recessed around the circumference of the inside (36) of the compression sleeve (3).

2. Compression sleeve joint as described in claim 1, characterised by the fact that the angle of the channel (33) facing the inside of the compression sleeve (3) is acute.

3. Compression sleeve joint as described in claims 1 and 2 characterised by the fact that several consecutive channels (33) are featured along the circumference of the inside wall (36) of the compression sleeve (3).

## Revendications

1. Raccord métallique par serrage en deux parties pour tubes et tuyaux en matière polymère avec un raccord constitué comme un couvre-joint tubulaire qui présente une zone d'emboîtement à poser dans l'extrémité du tube et un manchon à sertir mobile axialement par rapport à l'axe tubulaire qui ; lors de la réalisation de l'assemblage par serrage, peut glisser au-dessus de l'extrémité du tube avec la zone d'emboîtement mise en place, le manchon à sertir présentant sur son extrémité libre tournée vers le rebord de bride une gorge conique allant de l'extérieur vers l'intérieur au-dessus de la section de paroi à laquelle fait suite une zone cylindrique, caractérisé par le fait qu'une moulure creuse (33) est mise en place tout autour à l'extrémité de la gorge conique (32) avec une transition radiale après un segment cylindrique consécutif et court (35) à l'intérieur de la paroi circonférentielle (36) du manchon à sertir (3).

2. Assemblage par serrage selon la revendication 1, caractérisé par le fait que l'angle de la moulure creuse (33) dirigé vers l'intérieur du manchon à sertir (3) est un angle aigu.

3. Raccord par serrage selon les revendications 1 et 2, caractérisé par le fait que plusieurs moulures (33) consécutives sont réalisées dans la paroi intérieure circonférentielle (36) sur la longueur du manchon à sertir (3).

Fig. 1

EP 0 339 248 B1

## Fig. 2

## Fig. 3